# EUROPÄISCHE PATENTANMELDUNG

(11) **EP 1 693 809 A1**
(43) Veröffentlichungstag der Anmeldung: **23.08.2006**
(21) Anmeldenummer: 05003476.8
(22) Anmeldetag: 17.02.2005
(51) Int. Cl.: G08B 13/24

(54) **Einkaufswagen und Einkaufswagenverfolgungssystem**

(71) Anmelder: All4Retail SA, 6900 Lugano (CH)
(72) Erfinder: Diggelmann, Walter, 8152 Glattburg (CH); Diggelmann, Thomas, 8152 Glattburg (CH); Suckfüll, Jörg, 6900 Lugano (CH); Müller-Wende, Joachim, 6900 Lugano (CH)
(74) Vertreter: Schaad, Balass, Menzl & Partner AG

(57) **Zusammenfassung**

Erfindungsgemäss wird einem Einkaufswagen (10) eine eineindeutige Identifikation zugeordnet, die über einen am Einkaufswagen (10) angeordneten Transponder berührungsfrei abrufbar ist. Der am Einkaufswagen (10) angebrachte und mit einem RFID-Chip ausgestattete Transponder bildet zusammen mit Lesestationen, die über ein Computernetzwerk mit einem Computersystem verbundenen sind, ein Einkaufswagenverfolgungssystem.

## Beschreibung

Die vorliegende Erfindung betrifft einen Einkaufswagen gemäss Anspruch 1 und ein Einkaufswagenverfolgungssystem gemäss Anspruch 11.

Zur automatischen Erkennung, Registrierung und Überwachung von Objekten, beispielsweise in einem Einkaufszentrum oder einem Lager, können sogenannte RFID (Radio-Frequenz-Identifikations-Geräte)-Systeme eingesetzt werden. RFID-Systeme weisen im Allgemeinen wenigstens zwei Komponenten auf: einen am zu registrierenden Objekt angebrachten Transponder, der über eine Funktechnologie kontaktlos ausgelesen bzw. beschrieben werden kann, und eine Lesestation, die über eine Antenne Daten mit dem Transponder austauschen kann. Die Lesestationen sind typischerweise mit einem Computernetzwerk verbunden, an welches sie Daten zur Weiterverarbeitung leiten.

RFID-Systeme ermöglichen eine eindeutige Kennzeichnung von Objekten, wobei die Kennzeichnung drahtlos über eine Funkfrequenzkanal auf einen Abruf von der Lesestation hin an die Lesestation übertragen wird.

Ein bekanntes RFID-System zum Einsatz in Einkaufzentren ist beispielsweise das System GS² der Firma Gatekeeper Systems, LLC. Beim System GS² ist ein Rad an einem Fahrgestell eines Einkaufswagens mit einem Transponder ausgestattet. Tragbare bzw. stationäre Lesestationen rufen beim Verlassen bestimmter Bereiche, beispielsweise einem Eingang oder Ausgang, Daten vom Transponder ab und lösen bei einem unzulässigen Verlassen eines Bereichs eine Blockierung des mit dem Transponder bestückten Rades des Einkaufswagens aus. Auf diese Weise kann das unzulässige Verlassen des Einkaufswagens verhindert werden. Gegebenenfalls können zudem Videoaufzeichnungsgeräte eingeschaltet werden, um den Vorgang zu dokumentieren. Neben dem Blockieren können die Lesestationen auch ein Deblockieren des Rades bewirken.

Des weiteren ist es in Bereichen des Handels und der Lagerhaltung bekannt, Waren mit einem Transponder zu versehen, um beim Passieren einer mit einer Lesestation ausgestatteten Schleuse einen Bezahlvorgang auszulösen bzw. ein elektronisches Lagerhaltungssystem zu aktualisieren.

Aufgabe der vorliegenden Erfindung ist es, eine schnelle Verwaltung und zielgerichtete Disposition von Einkaufswagen zu ermöglichen, das Einkaufverhalten von Kunden beurteilen zu können und ein unerlaubtes Entfernen von Einkaufswagen in einem Einkaufszentrum zuverlässig zu verhindern.

Diese Aufgabe wird durch einen Einkaufswagen gemäss Anspruch 1 und ein Einkaufswagenverfolgungssystem gemäss Anspruch 11 gelöst.

Der erfindungsgemässe Einkaufswagen ist mit einem Transponder zur berührungsfreien Datenübertragung mittels elektromagnetischer Wellen ausgestattet. Zur Lösung der oben genannten Aufgabe wird am Einkaufswagen eine eineindeutige Identifikation angebracht, die über den Transponder abrufbar ist. Eineindeutig bedeutet dabei, dass die Identifikation für ein und denselben Einkaufswagen nie geändert wird und zwei Einkaufswagen nie die gleiche Identifikation besitzen.

Durch die Kennzeichnung von Einkaufswagen mit einer eineindeutigen Identifikation ist jeder einzelne Einkaufswagen durch ein ausschliesslich ihn allein kennzeichnendes Merkmal eineindeutig von Lesestationen, die in einem Einkaufszentrum einschliessend ein zugehöriges Areal, wie einen Parkplatz, ein Betriebs-, Lager- und Umgebungsgelände usw., angeordnet sind, erkenn-und ansprechbar. Insbesondere bei einer Verknüpfung von mehreren Lesestation in einem Computernetzwerk ist es beispielsweise dadurch ermöglicht, von einem Computer aus zentral festzustellen, welche Einkaufswagen sich in bestimmten Einkaufsabschnitten aufhalten bzw. wo sie sich in dem Einkaufsabschnitt befinden und Aufenthaltsorte von Einkaufswagen über die Zeit zu verfolgen. Weiterhin können zur Diebstahlsicherung Signale ausgelöst werden, wenn bestimmte Einkaufswagen einen spezifischen Einkaufsabschnitt, beispielsweise einen Ausgangsabschnitt, verlassen und es kann vorausbestimmt werden, wann bestimmte Einkaufsabschnitte, insbesondere ein Kassenabschnitt, besonders frequentiert werden wird, was wiederum eine angepasste Besetzung des Kassenabschnitts mit Personal ermöglicht. Weiterhin können Aktionen zur Disposition von Einkaufswagen, beispielsweise eine zusätzliche Bereitstellung von Einkaufswagen in einem Einkaufswagenparkabschnitt, ausgelöst werden.

Das erfindungsgemässe Einkaufswagenverfolgungssystem weist - neben den erfindungsgemässen Einkaufswagen - Lesestationen zum Abrufen der eineindeutigen Identifikation der Einkaufswagens auf. Über die bekannte Position der Lesestation ist es möglich, jeden Einkaufswagen individuell einem bestimmten Einkaufsabschnitt zuzuordnen und zeitlich für jeden Einkaufswagen individuell den Weg abschnittsweise oder kontinuierlich durch das Einkaufszentrum mit dem zugehörigen Areal zu verfolgen. Auf diese Weise kann vorteilhaft ein Laufweg eines Einkaufswagens in einem Ort-Zeit-Diagramm registriert bzw. kontrolliert werden, um durch eine Verbindung mit einem Tor-, Schranken- und/oder Alarmmechanismus einen unzulässigen Abtransport des Einkaufswagens zu verhindern. Individuelle Laufwege können zur Beweisführung von Ladendiebstählen herangezogen werden und Hinweise auf Personenbewegungen im Laden, beispielsweise nach einer Umstellung von Verkaufsgestellabschnitten geben.

Weitere bevorzugte Ausführungsformen des erfindungsgemässen Einkaufswagens bzw. des erfindungsgemässen Einkaufswagensverfolgungssystems weisen die in den abhängigen Ansprüchen aufgeführten Merkmale auf.

Die Erfindung wird nachfolgend anhand der Zeichnungen beschrieben. Es zeigen rein schematisch:
- Fig. 1: in einer Seitenansicht und einer Rückansicht einen erfindungsgemässen Einkaufswagen, bei dem die mit P1 - P11 bezeichneten Pfeile auf Positionen zeigen, an denen ein Transponder angebracht sein kann;
- Fig. 2: in einer perspektivischen Seitenansicht eine noch nicht an einem Einkaufswagen angebrachte Haltemanschette mit einem Transponder und einer Transponderantenne;
- Fig. 3: in einer perspektivischen Seitenansicht eine Griffstange eines Einkaufswagens mit der angebrachten, in Fig. 2 gezeigten Haltemanschette mit dem Transponder; und
- Fig. 4: in einer schematischen Draufsicht ein Einkaufszentrum mit verschiedenen Einkaufsabschnitten, in denen sich Personal, Kunden und Einkaufswagen befinden.

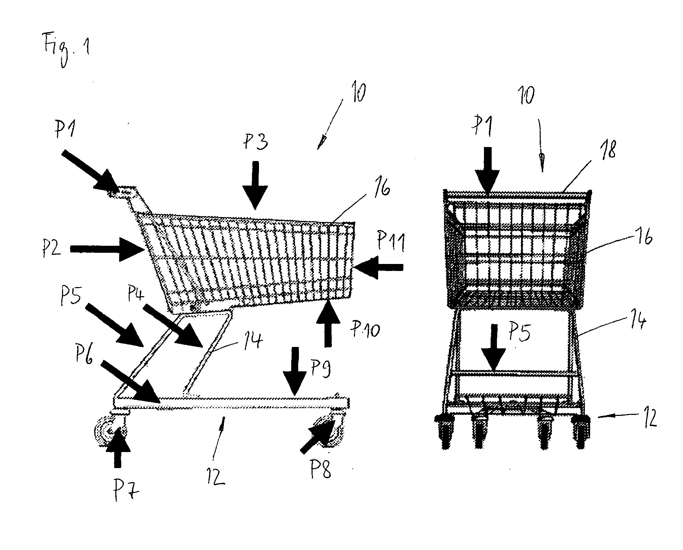

Der in Fig. 1 gezeigte Einkaufswagen 10 ist mit einem Fahrgestell 12, einem darauf angeordneten Rahmen 14 und einer am Rahmen 14 befestigten Warenaufnahme 16 in Form eines Warenkorbs ausgestattet. Das Fahrgestell 12 ist dabei aus Stahlovalrohr, der Rahmen 14 und die Warenaufnahme 16 aus verzinktem Stahldraht und eine am Rahmen angeordnete Griffstange 18 ist aus einem mit Kunststoff überzogenen Stahlrohr gefertigt. Sowohl die Geometrie und die Grösse als auch die Materialien des Einkaufswagens 10 können variieren und bestimmten Erfordernissen eines speziellen Einkaufszentrums bzw. einer bestimmten Warengruppe angepasst sein.

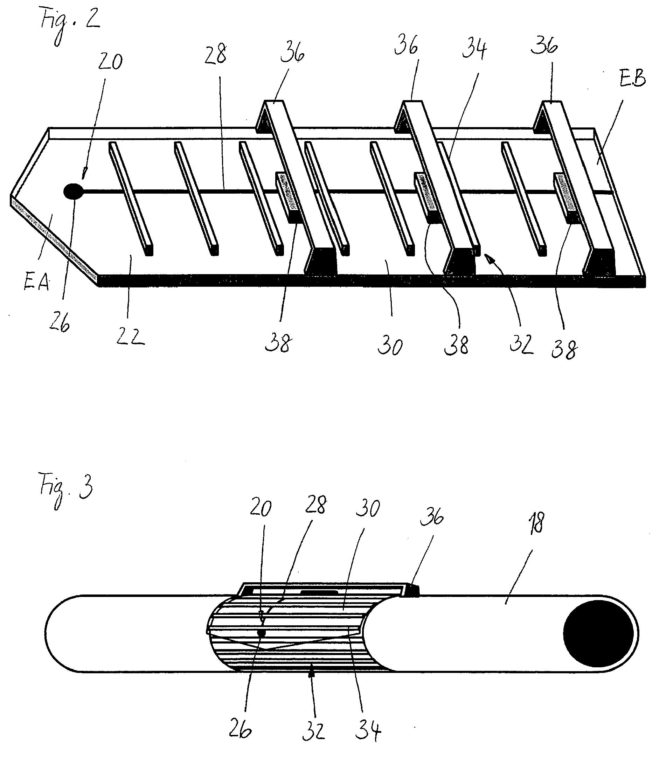

An der in Fig. 1 mit einem Pfeil P1 bezeichneten Position des Einkaufswagens 10 ist ein Transponder 20, wie er in Fig. 2 und 3 gezeigt ist, zur berührungsfreien Datenübertragung mittels elektromagnetischer Wellen (Funk) angeordnet. Dabei ist der Transponder 20 in einer in Fig. 2 und Fig. 3 gezeigte Haltemanschette 22 eingegossen und an der Griffstange 18 befestigt. Diese Art der Befestigung wird im Zusammenhang mit der Beschreibung der Fig. 2 und 3 später detailliert erläutert. Neben der Befestigung des Transponders 20 mit einer Haltemanschette 22 sind alternativ auch andere Fügetechniken, beispielsweise eine Spritzgiess-, Klebe-, Löt-, Schweiss-, Klemm- oder Schraubverbindungstechnik zur Befestigung des Transponders 20 am Einkaufswagen 10 möglich. Alternative Befestigungspositionen sind in Fig. 1 durch die Pfeile P2 bis P11 angezeigt. Es ist ebenfalls möglich den Transponder 20 beispielsweise in ein an der Griffstange 18 angebrachtes Pfandschloss oder eine Stossstange oder andere Teile des Einkaufswagens 10, wie das Fahrgestell 12, den Rahmen 14 und die Warenaufnahme 16, zu integrieren bzw. einzubauen. Um eine unerwünschte Manipulation oder Entfernung des Transponders 20 zu verhindern bzw. zu erschweren, ist der Transponder 20 vorzugsweise derart am bzw. im Einkaufswagen 10 angeordnet, dass er, ausser für ein Fachpersonal, nicht oder nur schwer sicht- bzw. erkennbar ist.

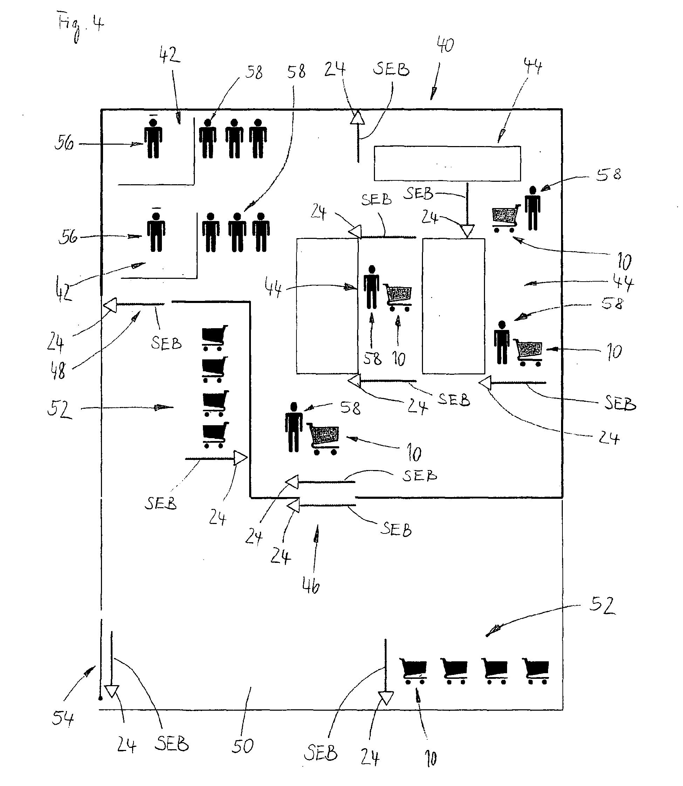

Im Transponder 20 des Einkaufswagens 10 ist, elektronisch codiert, eine eineindeutige Identifikation des Einkaufswagens abrufbar hinterlegt. Als Identifikation können dabei beliebige Kombinationen von Zahlen, Ziffern oder Zeichen, beispielsweise eine Seriennummer des Einkaufswagens 10, die in einer elektronischen Bitfolge codierbar sind, genutzt werden. Über seine nicht zu ändernde Identifikation kann der Einkaufswagen 10 eindeutig erkannt und von in Fig. 4 schematisch gezeigten Lesestationen 24 angesprochen werden.

Der in Fig. 2 und Fig. 3 gezeigte Transponder 20 weist einen schematisch als kreisförmiges Gebilde gezeichneten RFID-Chip 26 und eine elektrisch mit dem RFID-Chip 26 verbundene, im Wesentlichen parallel zur Längsachse der Haltemanschette 22 verlaufende drahtförmige Transponderantenne 28 auf. Die Identifikation ist vorzugsweise unveränderbar in den RFID-Chip 26 implementiert.

Die Transponderantenne 28 dient einerseits dem Datenaustausch mit der Lesestation 24 und andererseits einer Speisung des Transponders 20 mit elektrischer Energie durch von der Lesestation 24 abgestrahlte elektromagnetischen Wellen. Einen über seine Transponderantenne 28 gespiesenen Transponder 20 bezeichnet man als passiven Transponder. Alternativ sind auch aktive Transponder möglich, deren Speisung vorzugsweise über eine Batterie oder eine andere am Einkaufswagen 10 angeordnete Energiequelle, beispielsweise auch einer Solarzelle, erfolgt. Es ist ebenfalls ein Einsatz von Mischformen aus aktiven und passiven Transpondern denkbar.

Die Transponderantenne 28 ist in einer dem Fachmann bekannten Art und Weise an eine vom Transponder 20 und der Lesestation 24 für einen Datenaustausch genutzte Frequenz elektromagnetischer Wellen angepasst. Dabei nutzbare Frequenzbänder befinden sich beispielsweise in einem Niedrigfrequenzbereich zwischen 125 - 134 KHz, in einem Hochfrequenzbereich von 13,56 MHz und in einem Ultrahochfrequenzbereich zwischen 868 - 915 MHz. Die zu nutzende Frequenz ist dabei hinsichtlich spezifischer Einsatzbedingungen sowie Standards, Vorschriften und gesetzlichen Bestimmungen ausgewählt.

Je nach verwendeter Frequenz der elektromagnetischen Wellen ist der Abstand für einen Datenaustausch zwischen dem Transponder 20 und der Lesestation 24 im Niedrigfrequenzbereich (NF) bis auf etwa 1,2 m, im Ultrahochfrequenzbereich (UHF) bis auf etwa 4 m beschränkt. Alternativ kann ein berührungsloser Datenaustausch auch mittels Ultraschallwellen oder Infrarotstrahlung erfolgen.

Bei der in Fig. 2 gezeigten Haltemanschette 22 ist der RFID-Chip nahe einem spitz zulaufenden Endbereich EA eines streifenartigen Grundkörpers 30 der aus einem flexiblen Kunststoff gefertigten Haltemanschette 22 eingegossen. Ausgehend vom RFID-Chip 26 erstreckt sich die Transponderantenne 28 bis zu einem dem Endbereich EA gegenüber liegenden Endbereich EB und ist ebenfalls im streifenartigen Grundkörper 30 eingegossen. Durch eine Einfärbung des Kunststoffs für die Haltemanschette 22 sind der RFID-Chip 26 und die Transponderantenne 28 von aussen nicht sichtbar.

Die Haltemanschette 22 kann in ihren äusseren Randbereichen beispielsweise durch Materialverstärkungen und/oder eingegossene Drähte verstärkt sein, um ein Aufschneiden und Entfernen der Haltemanschette 22 zu verhindern bzw. zu erschweren.

Einseitig erhebt sich vom streifenartigen Grundkörper 30 eine Verzahnung 32. Die Verzahnung 32 setzt sich aus einer Mehrzahl von im Wesentlichen senkrecht zur Längsachse der Haltemanschette 22 orientierten, auf dem Grundkörper 30 fussenden Stegen 34 zusammen.

Oberhalb der Stege 34 sind am Grundkörper 30 der Haltemanschette 22 drei U-förmige Brückenelemente 36 ausgeformt. Koaxial bezüglich der Längsachse der Haltemanschette 22 sind an den Brückenelementen 36 verzahnungsseitig Halteelemente 38 ausgebildet.

Zum Befestigen der Haltemanschette 22 an der Griffstange 18 wird, wie in Fig. 3 gezeigt, der spitz zulaufende Endbereich EA schlaufenartig, mit der der Verzahnung 32 gegenüberliegenden Seite flach an der Griffstange 18 anliegend um die Griffstange 18 herum geführt und in Richtung des gegenüberliegenden Endbereichs EB zwischen die Brückenelemente 36 und dem Grundkörper 30 eingeführt und festgezurrt. Dabei wirkt, ähnlich wie bei einem Kabelbinder bekannter Art, die Verzahnung 32 mit den Halteelementen 38 derart zusammen, dass sich eine einmal geschlossene Haltemanschette 22 nicht mehr selbständig öffnet und sich dadurch nicht selbständig von der Griffstange 18 entfernen kann bzw. nicht mehr zerstörungsfrei vom Einkaufswagen 10 entfernbar ist. Die Vielzahl von Halteelementen 38 und Stegen 34 erlaubt eine Anpassung , der schlaufenartigen Umwicklung der Haltemanschette 22 an verschiedene Durchmesser von Griffstangen 18 oder gegebenenfalls an andere Teile des Einkaufswagens 10.

Um die Eineindeutigkeit der Identifikation des Einkaufswagens 10 sicherzustellen, kann es bei einer Entfernung der Haltemanschette 22 vorgesehen sein, dass der die Identifikation beinhaltende Transponder 20 bei einer Entfernung zerstört bzw. die Identifikation gelöscht wird. Mit anderen Worten: die Identifikation kann nicht zerstörungsfrei vom Einkaufswagen 10 entfernt werden. Darüber hinaus ist es möglich, dass der Transponder 20 bei einer Entfernung vom Einkaufswagen 10 ein entsprechendes Alarmsignal an eine Lesestation 24 sendet, oder dass eine Lesestation 24 bzw. ein an die Lesestation 24 angeschlossenes Computernetzwerk bei einer ausbleibenden Registrierung des Transponders 20 innerhalb eines bestimmtem Zeitraums oder bei einem langandauernden Verbleib des Transponders 20 an einem Ort ein Alarmsignal auslöst.

Neben dem in Fig. 2 und Fig. 3 gezeigten RFID-Chip 26 kann die Haltemanschette 22 zusätzlich mit einem nicht gezeigten Positionierungssystem-Empfänger, beispielsweise einem GPS-Empfänger, ausgestattet sein. Dieser Positionierungssystem-Empfänger ist dann elektronisch mit dem Tranponder 20 verbunden und dient der Übermittlung von Positionsdaten des Einkaufswagens 10 an die Lesestation 24, um den Einkaufswagen 10 beispielsweise nach einem Diebstahl auffinden zu können oder in einem ausgedehnten Einkaufszentrum 40 zu lokalisieren.

In Fig. 4 ist schematisch ein Einkaufszentrum 40 gezeigt. Innerhalb des Einkaufszentrums 40 sind beispielhaft verschiedene Einkaufsabschnitte, insbesondere zwei Kassenabschnitte 42, drei Verkaufsgestellabschnitte 44, ein Eingangsabschnitt 46 und auf einem angrenzenden Areal 50 zwei Einkaufswagenparkabschnitte 52 sowie ein Torabschnitt 54 angeordnet. Der Torabschnitt 54, die Einkaufswagenparkabschnitte 52, der Eingangsabschnitt 46, der Ausgangsabschnitt 48 und die Verkaufsgestellabschnitte 44 sind mit Lesestationen 24 ausgestattet. Diese Lesestationen 24 sind jeweils mit Antennen ausgerüstet, die schranken- bzw. vorhangartige Sende-Empfangs-Bereiche SEB für einen Datenaustausch mit den an Einkaufswagen 10 angebrachten Tranpondern 20 abdecken.

Dabei sind insbesondere die durchgangsartigen Verkaufsgestellabschnitte 44 vorzugsweise mit mindestens zwei Lesestationen 24 ausgestattet, um jeweils an einem Zugang und einem Abgang zum Verkaufsgestellabschnitt 44 das Passieren von Einkaufswagen 10 registrieren zu können.

Für die Abdeckung der in Fig. 4 gezeigten schranken- bzw. vorhangartigen Sende-Empfangs-Bereiche SEB ist das RFID-System, umfassend die an den Einkaufswagen 10 angebrachten Transponder 20 und die Lesestationen 24, für einen Datenaustausch im Niedrigfrequenzbereich ausgelegt. Die Antennen der Lesestationen 24 sind dabei vorzugsweise im Boden versenkt, in einem Deckenbereich des Einkaufszentrums oberhalb der Einkaufswagen 10 angeordnet oder seitlich an Gestellen bzw. Verkaufsgestellen angebracht.

Insbesondere für einen Datenaustausch im UHF Frequenzbereich können die Lesestationen 24 mit zugeordneten Raumantennen ausgestattet sein. Die Raumantennen sind dabei derart ausgerichtet, dass sie räumlich ausgedehnte Sende-Empfangs-Bereiche SEB, beispielsweise ganze Passagen zwischen Verkaufgestellen, für den Datenaustausch abdecken. Die räumlich ausgedehnten Sende-Empfangs-Bereich SEB sind dabei vorzugsweise jeweils so ausgelegt, dass sich benachbarte Sende-Empfangs-Bereiche SEB überlappen, um eine kontinuierliche Verfolgung der Einkaufswagen 10 von einem Sende-Empfangs-Bereich SEB zu einem benachbarten Sende-Empfangs-Bereich SEB zu ermöglichen.

Neben Einkaufszentren 40 mit eine Ausstattung von entweder Antennen oder Raumantennen sind auch Mischformen möglich, bei denen sowohl Antennen und als auch Raumantennen vorgesehen sind. Auf diese Weise können je nach lokaler Ausgestaltung innerhalb des Einkaufszentrums 40 schranken- bzw. vorhangartige Sende-Empfangs-Bereiche SEB und räumlich ausgedehnte Sende-Empfangs-Bereiche SEB abgedeckt bzw. kombiniert werden.

Die für den Datenaustausch zwischen Lesestationen 24 und Transpondern 20 genutzten Frequenzen und entsprechend auch die Ausführungen der Antennen bzw. Raumantennen und Transponderantennen 28 sind aufeinander abgestimmt.

Die Lesestationen 24 sind über ein Computernetzwerk mit einem Computersystem verbunden, an welches die von den Transpondern 20 übermittelten Daten, die an der Lesestation 24 mit einem Zeitpunkt und der Position der Lesestation verknüpft werden, weitergeleitet und verarbeitet werden. Durch eine Aufzeichnung einer zeitlichen Abfolge von Positionsdaten individuell für jeden einzelnen Einkaufswagen 10 können individualisierte Ort-Zeit-Diagramme bzw. Laufwege mit Hilfe des Computersystems erstellt werden. Diese Ort-Zeit-Diagramme ermöglichen eine Kapazitäts- und Auslastungsplanung für die Einkaufswagen 10 und gegebenenfalls für das Personal 56, sowie Analysen zum Einkaufsverhalten der Kunden 58.

Das Computersystem zur Einkaufswagenverfolgung kann ausser mit den Lesestationen 24 zusätzlich mit weiteren technischen Vorrichtungen, wie einer Video- oder Fotokameraeinheit, Alarmlampen, Türen, akustischen Signalvorrichtungen bzw. SMS- und Email-Einheiten, die beispielsweise einer Benachrichtigung des Personals 56 über Alarm- bzw. Systemsignale dienen, verbunden sein.

Weiterhin ist es möglich, das Computersystem zur Personalisierung eines Einkaufs mit einer Registratureinheit, die Daten von einem Kartenleser, einer Fotokamera, einem Fingerscanner oder einem Passleser erhält, zu vernetzen. Darüber hinaus ist es durch eine Verbindung des Computersystems mit im Kassenabschnitt 42 angeordneten Kassen und daran angeschlossenen Kartenlesern, Fingerscannern oder EC-Readern möglich, einen Bezahlvorgang zu automatisieren und personalisierte Daten für eingekaufte Produkte mit den Ort-Zeit-Diagrammen der Einkaufswagenverfolgung zu verknüpfen.

Für den oben erwähnten Fall, dass ein Einkaufswagen 10 mit einem Positionierungssystem-Empfänger ausgestattet ist, kann dieser im Fall eines Diebstahles weltweit geortet und aufgefunden werden. Ein möglicher Diebstahl wird allerdings bereits frühzeitig durch die im Torabschnitt 54 angeordnete Lesestation angezeigt und kann da bereits beispielsweise durch Verschliessen eines Tores verhindert werden.

Mittels der Lesestation 24 in den Einkaufswagenparkabschnitten 52 kann überwacht werden, wie viele Einkaufswagen 10 für Kunden 58 bereit stehen. Zusätzlich kann das Computersystem beispielsweise Informationen an einen Benutzer ausgeben, welche Einkaufswagen 10 von welchem Einkaufswagenparkabschnitt 52 zu einem anderen Einkaufswagenparkabschnitt 52 transportiert werden müssen, um eine gleichmässige Versorgung der Kunden mit Einkaufswagen 10 sicherzustellen und eine ungleiche Verteilung zu vermeiden.

Weiterhin kann durch eine statistische Auswertung von Ort-Zeit-Diagrammen der Einkaufswagen 10 der voraussichtliche Bedarf an Einkaufswagen bestimmt werden. Dadurch ist es beispielsweise zur Vermeidung eines Diebstahls von Einkaufswagen 10 möglich, an weniger frequentierten Tagen eine Anzahl von Einkaufswagen 10 in einem geschlossenen Depot zu verwahren.

Mittels am Eingangsabschnitt 46 und am Ausgangsabschnitt 48 angeordneter Lesestationen 24, die über das Computersystem mit einer Kasseneinheit verbunden sind, ist es möglich festzustellen, wann Einkaufswagen 10 ohne die Tätigung eines Bezahlvorgangs das Einkaufszentrum verlassen, und gegebenenfalls ein Alarm auszulösen.

Die in den Verkaufsgestellabschnitten 44 angeordneten Lesestationen 24 erlauben es jederzeit, die im Einkaufsbereich befindlichen Einkaufswagen zu identifizieren. Durch rekonstruierte Laufwege von Einkaufswagen 10 bzw. von Kunden 58 können Verkaufsgewohnheiten der Kunden 58 analysiert werden und verkaufsfördernde Massnahmen, z.B. durch Umordnung von Verkaufsgestellen, abgeleitet werden.

Neben einem Datenaustausch zwischen den an Einkaufswagen 10 angeordneten Transpondern 20 und Lesestationen 24 ist es auch möglich, den Datenaustausch auf ebenfalls mit Transpondern bestückte Produkte, die sich im Einkaufswagen 10 befinden, auszudehnen.

## Patentansprüche

1. Einkaufswagen mit daran befestigtem Transponder (20) zur berührungsfreien Datenübertragung, **gekennzeichnet durch** eine dem Einkaufswagen (10) zugeordnete eineindeutige Identifikation, die über den Transponder (20) abrufbar ist.

2. Einkaufswagen nach Anspruch 1, **dadurch gekennzeichnet, dass** der Transponder (20) einen RFID-Chip (26) mit einer Transponderantenne (28) aufweist.

3. Einkaufswagen nach Anspruch 1 oder 2, **dadurch gekennzeichnet, dass** der Transponder (20) dazu bestimmt ist, zusammen mit einer Lesestation (24) ein RFID-System zu bilden, bei dem die Identifikation des Einkaufswagens (10) über den Transponder (20) an die Lesestation (24) übermittelbar ist.

4. Einkaufswagen nach einem der Ansprüche 1 bis 3,
**dadurch gekennzeichnet, dass** die eineindeutige Identifikation des Einkaufswagens (10) elektronisch kodiert im Transponder (20) hinterlegt ist.

5. Einkaufswagen nach einem der Ansprüche 1 bis 4,
**dadurch gekennzeichnet, dass** der Einkaufswagen (10) einen Positionierungssystem-Empfänger aufweist, der zum Zweck der Übermittlung von Positionsdaten des Einkaufswagens (10) mit dem Transponder (20) elektronisch verbunden ist.

6. Einkaufswagen nach einem der Ansprüche 1 bis 5,
**dadurch gekennzeichnet, dass** der Transponder (20) elektrisch aktiv oder passiv gespiesen wird.

7. Einkaufswagen nach einem der Ansprüche 1 bis 6,
**dadurch gekennzeichnet, dass** der Transponder (20) zur Datenübertragung elektromagnetische Wellen mit einer Frequenz in einem Frequenzband von 125 kHz bis 134 kHz(NF Niedrigfrequenz), um etwa 13,56 MHz (HF Hochfrequenz) oder von 868 MHz bis 915 MHz (UHF Ultrahochfrequenz) nutzt.

8. Einkaufswagen nach einem der Ansprüche 1 bis 7,
**dadurch gekennzeichnet, dass** die Identifikation des Einkaufswagens (10) nicht zerstörungsfrei vom Einkaufswagen (10) entfernbar ist.

9. Einkaufswagen nach einem der Ansprüche 1 bis 8,
**dadurch gekennzeichnet, dass** der Transponder (20) an ein Fahrgestell (12), einen auf dem Fahrgestell (12) angeordneten Rahmen (14) oder an eine am Rahmen (14) befestigten Warenaufnahme des Einkaufswagens (10) mittels Spritzgiess-, Klebe-, Löt-, Schweiss-, Klemm-oder Schraub-Verbindungstechnik gefügt ist.

10. Einkaufswagen nach Anspruch 9, **dadurch gekennzeichnet, dass** der Transponder (20) in eine Haltemanschette (22) eingegossen und die Haltemanschette (22) an einer am Rahmen (14) angeordneten Griffstange (18) angebracht ist.

11. Einkaufswagenverfolgungssystem für Einkaufswagen nach einem der Ansprüche 1 bis 10, bei dem die Einkaufswagen (10) mit Transpondern (20) ausgestattet sind und Lesestationen (24) zum Abrufen einer Identifikation der Einkaufswagen (10) in einen Datenaustausch mit den Transpondern (20) der Einkaufswagen (10) treten können.

12. Einkaufswagenverfolgungssystem nach Anspruch 11,
**dadurch gekennzeichnet, dass** der dem Einkaufswagen (10) zugeordnete Transponder (20) und die Lesestation (24) ein RFID-System bilden.

13. Einkaufswagenverfolgungssystem nach Anspruch 11 oder 12, **dadurch gekennzeichnet, dass** die von den Transpondern (20) übermittelten Daten mit einem Zeitpunkt und einer Position verknüpft und an ein Computersystem zur Verarbeitung weitergeleitet werden.

14. Einkaufswagenverfolgungssystem nach einem der Ansprüche 11 bis 13, **dadurch gekennzeichnet, dass** Lesestationen (24) bestimmten Einkaufsabschnitten, insbesondere einem Kassenabschnitt (42), einem Verkaufsgestellabschnitt (44), einem Eingangsabschnitt (46), einem Ausgangsabschnitt (48), einem Einkaufswagenparkabschnitt (52) und einem Torabschnitt (54) zugeordnet sind.

15. Einkaufswagenverfolgungssystem nach einem der Ansprüche 11 bis 14, **dadurch gekennzeichnet, dass** der Lesestation (24) eine Antenne zugeordnet ist, um einen schranken- bzw. vorhangartigen Sende-Empfangs-Bereich (SEB) für den Datenaustausch abzudecken.

16. Einkaufswagenverfolgungssystem nach einem der Ansprüche 11 bis 15, **dadurch gekennzeichnet, dass** der Lesestation (24) eine Raumantenne zugeordnet ist, um einen räumlich ausgedehnten Sende-Empfangs-Bereich (SEB) für den Datenaustausch abzudecken.

17. Einkaufswagenverfolgungssystem nach Anspruch 16,
**dadurch gekennzeichnet, dass** sich zwei benachbarte räumlich ausgedehnte Sende-Empfangs-Bereiche (SEB) überlappen, um eine kontinuierliche Verfolgung des Einkaufswagens (24) zu ermöglichen.
